# EUROPEAN PATENT APPLICATION

(11) **EP 3 232 496 A1**
(43) Date of publication of application: **18.10.2017**
(21) Application number: 15867779.9
(22) Date of filing: 13.11.2015
(51) Int. Cl.: H01M 2/34, H01C 1/14, H01C 7/02, H01M 2/06

(54) **ELECTRODE**

(30) Priority: 08.12.2014 JP 2014247959; 18.05.2015 JP 2015100894
(71) Applicant: Littelfuse Japan G.K., Minato-ku Tokyo 105-0014 (JP)
(72) Inventor: YAMAOKA, Toshikazu, Inashiki-shi Ibaraki 300-0626 (JP); ASO, Shigeyuki, Kawasaki-shi Kanagawa 213-8535 (JP)
(74) Representative: Murgitroyd & Company
(86) International application number: PCT/JP2015/081973
(87) International publication number: WO 2016/093015

(57) **Abstract**

The present invention provides an electrode for an electrical device, the electrode comprising: a PTC element; a first terminal disposed on one main surface of the PTC element and extending in one direction; and a second terminal disposed on the other main surface of the PTC element and extending in a different direction from the first terminal.

## Description

### Technical Field

The present invention relates to an electrode through which current passes to and from an electronic device, such as an extracting electrode for a rechargeable battery, and to an electronic device using this electrode, such as a rechargeable battery.

### Background Art

As the functionality and versatility of electronic devices increases, so too has the amount of power used by these devices. Consequently, there is growing demand for higher capacity batteries. Among these electronic devices, use of mobile devices such as cell phones, smartphones, tablets, and notebook PCs has been increasing rapidly. Consumers want mobile devices that are even more compact and lighter weight than current models, so space inside the case for housing a battery is limited. As more functionality is added to electronic devices, more space inside the case is occupied by other electronic components (such as a camera and various types of sensors), and it becomes more difficult to ensure that there is sufficient space for housing a battery.

Compact, high-capacity lithium-ion rechargeable batteries are commonly used in electronic devices, especially mobile devices. However, in order to prevent leakage of the liquid electrolyte, lithium-ion rechargeable batteries use an aluminum or iron canister with sufficient external strength. Therefore, even though lithium-ion rechargeable batteries are light and compact, there are structural limitations on how thin and light these batteries can become because they require external strength. There are also limitations on the shape of lithium-ion rechargeable batteries because a hard exterior material is required.

Therefore, lithium-ion polymer rechargeable batteries which do not use a liquid electrolyte are receiving increased attention. The electrolyte in a lithium-ion polymer rechargeable batteries is a non-fluid material such as a gel. Because there are no concerns about leaking liquid, the outer coating can be an aluminum laminate film. These are known as pouch-type batteries, and they are extremely light, extremely small, and can assume a wide variety of shapes.

However, in order to protect the rechargeable battery from overcurrent and overheating, a protective element is used in the rechargeable battery circuitry. The protective element is usually a PTC (positive temperature coefficient) element. In order to reduce the amount of mounting space required and to reduce mounting costs, the PTC element is disposed between the board and an electrode in the lithium-ion polymer rechargeable battery. Specifically, the PTC element is disposed on the board, preferably integrated beforehand with a welding block, and an electrode of the lithium-ion polymer battery is connected on top.

When a PTC element used as a protective element in a rechargeable battery reaches a predetermined temperature, it is activated (tripped) to cut off the flow of current and protect the elements to be protected. When a rechargeable battery is protected from overheating, the heat from the overheating rechargeable cell is transmitted to the PTC element. The temperature of the PTC element rises, the PTC element is activated, the current is cut off, and the elements to be protected are protected. When a rechargeable battery or circuitry connected to a rechargeable battery is protected, the overcurrent heats up the PTC element. When the element reaches a predetermined temperature, it is activated. The current is cut off and the elements to be protected are protected.

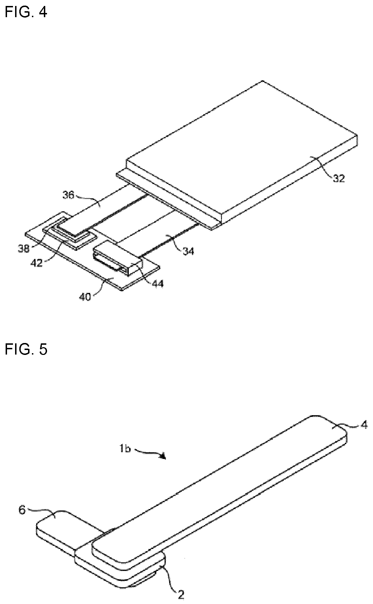

FIG. 4 shows an example in which a PTC element 38 and a conventional rechargeable battery consisting of a cell 32, positive electrode 34, and negative electrode 36 are connected to a board 40. In FIG. 4, the PTC element 38 is disposed on the board 40 and connected to the negative electrode 36 via a welding tab 42. The positive electrode 34 is connected to the board 40 so as to be enveloped by the welding tab 44 in order to facilitate welding to the board.

### Prior Art Documents

### Patent Documents

Patent Document 1: JP 2014-044865 A

### Summary of the Invention

### Problem to be Solved by the Invention

The present inventors noticed that activation is sometimes delayed when a PTC element is disposed on a board (or near a board) because the board has a large heat capacity and heat transmitted to the PTC element or generated by the PTC element is readily transmitted to the board and dissipated therein. As a result, the temperature of the PTC element is less likely to rise. They also noticed that heat generated by other electronic components on the board (such as by a field-effect transistor or FET) is transmitted to the PTC element via the board, causing the temperature of the PTC element to rise (that is, increase resistance) and possibly lowering the holding current of the PTC element.

Therefore, it is an object of the present invention to provide a protective element which is quickly activated when a rechargeable battery overheats to cut off the current, and which is less likely to be affected by other electronic components.

### Means For Solving the Problem

As a result of extensive research, the present inventors discovered that they could solve the problems described above by disposing terminals on one or both main surfaces of a PTC element to create an extracting electrode for a rechargeable battery that also functions as a protective element.

A first aspect of the present invention is an electrode for an electrical device, the electrode comprising:
a PTC element;
a first terminal disposed on one main surface of the PTC element and extending in one direction; and
a second terminal disposed on the other main surface of the PTC element and extending in a different direction from the first terminal.

A second aspect of the present invention is an electrode for an electrical device, the electrode comprising:
a PTC element;
a first terminal disposed on a portion of one main surface of the PTC element and extending in one direction; and
a second terminal disposed on another portion of the main surface apart from the first terminal and extending in a different direction from the first terminal.

### Effect of the Invention

In the present invention, a first terminal and a second terminal are disposed on one or both main surfaces of a PTC element and extend in different directions to create an extracting electrode for a rechargeable cell. In this way, the PTC element can be arranged closer to the rechargeable cell. Because the PTC element can be arranged closer to the rechargeable battery in the present invention, when the rechargeable cell overheats, the PTC element can detect the heat and become activated more quickly. Because the PTC element is located away from the board, it is less susceptible to heat generated by other electronic components on the board, and the heat from these electronic components can be kept from lowering the holding current of the element.

### Brief Description of the Drawings

FIG. 1 is a schematic perspective view of an extracting electrode 1a in an aspect of the present invention.
FIG. 2 is a schematic side view of the extracting electrode 1a in FIG. 1.
FIG. 3 is a schematic perspective view showing how a rechargeable battery 11 with the extracting electrode 1a in FIG. 1 is connected to a board.
FIG. 4 is a schematic perspective view showing how a conventional rechargeable battery and PTC element are connected to a board.
FIG. 5 is a schematic perspective view of an extracting electrode 1b in another aspect of the present invention.
FIG. 6 is a schematic perspective view of an extracting electrode 1c in another aspect of the present invention.
FIG. 7 is a schematic perspective view of an extracting electrode 1d in another aspect of the present invention.

### Aspect of the Invention

The following is a detailed description of an extracting electrode in an aspect of the present invention with reference to the drawings.

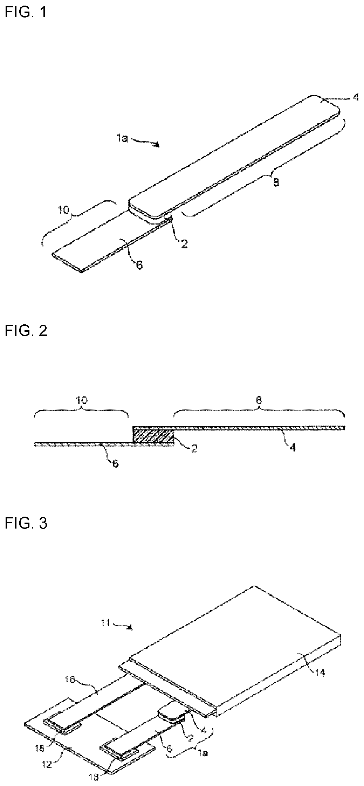

The structure of the extracting electrode 1a in the first embodiment of the present invention is shown in FIG. 1 and FIG. 2. Specifically, the extracting electrode 1a has a PTC element 2, a first terminal 4, and a second terminal 6. The first terminal 4 and the second terminal 6 are arranged on main surfaces of the PTC element 2 and extend in opposite directions from the PTC element. The first terminal 4 is connected electrically to the internal electrode or the current collector in a rechargeable cell, and the second terminal is connected electrically to another electrical component (such as a board). Because the extracting electrode 1 a of the present invention has a PTC element, it also functions as a protecting element.

The PTC element used in the present invention may be a ceramic PTC element or a polymer PTC element. However, a polymer PTC element is preferred. Compared to a ceramic PTC element, a polymer PTC element is easier to process, has a lower resistance value, and is less likely to self-destruct above a certain temperature.

Any polymer PTC element common in the art can be used. This element is usually obtained by extruding a conductive composition composed of a conductive filler (carbon black, nickel alloy, etc.) dispersed in a polymer (polyethylene, polyvinylidene fluoride, etc.) and then cutting the extruded product to a predetermined size.

In one aspect, the PTC element may be a PTC element having a thin laminated electrode (foil electrode) on at least one main surface and preferably on both. Specifically, in one aspect, the extracting electrode of the present invention may have a layered metal electrode positioned between the main surface of the PTC element and the first terminal or the second terminal arranged on top.

There are no particular restrictions on the material constituting the layered metal electrode as long as it is a conductive metal. Examples include copper, nickel, aluminum, gold, and alloys thereof.

In a layered metal electrode, the PTC composition constituting the PTC element is simultaneously extruded along with the metal sheet (or metal foil) constituting the layered metal electrode. In this way, an extrudate is obtained in which a layer of the PTC composition is interposed between layered metal electrodes. In another aspect, a layered metal electrode is obtained by extruding a layer of the PTC composition, interposing the layer between metal sheets (or metal foil), and subjecting the resulting laminate to thermocompression bonding. In another aspect, a layer of the PTC composition is plated with conductive metal to obtain layered metal electrodes on both main surfaces of the layer. When a laminate is manufactured, a plurality of PTC elements may be arranged adjacent to each other with layered metal electrodes on both main surfaces, and then the laminate may be cut to a predetermined shape and size to obtain individual PTC elements with layered metal electrodes.

The first terminal 4 is arranged on one main surface of the PTC element 2, and a second terminal 6 is arranged on the other main surface.

There are no particular restrictions on the method used to join the PTC element to the terminals. Examples include pressure bonding and the use of a conductive adhesive. Other methods include using a PTC element (having a thin metal electrode on both main surfaces of the PTC element) and joining the terminals to the thin metal electrodes on the PTC element using soldering, welding, pressure bonding, or a conductive adhesive. In order to join the components more easily, the terminals can be clad or partially clad, or the joint between the terminals and the PTC component (PTC element) can be plated.

There are no particular restrictions on the shape of the first terminal 4 and the second terminal 6 as long as the shape allows them to function as an extracting electrode. Examples include rod shaped and slit shaped terminals. The shape of the first terminal 4 and the second terminal 6 can be the same or different.

As shown in the drawings, the first terminal 4 and the second terminal 6 each have an extension 8, 10 extending outward on a main surface of the PTC element. Preferably, the extensions 8, 10 of the first terminal 4 and the second terminal 6 extend in opposite directions (directions forming a 180° angle) on the main surfaces of the PTC element. However, the present invention is not restricted to the present aspect. The terminals may extend in any direction as long as the first terminal 4 can be connected to a rechargeable cell and the second terminal can be connected to another electronic component. For example, the first terminal and the second terminal may be arranged so as to form a 90° angle (right angle). Also, the second terminal may extend not in one direction but in two directions or three directions.

As shown in the drawings, the first terminal 4 and the second terminal 6 are preferably arranged so as to cover the entire main surface and match the shape of the main surface of the PTC element excluding the extension 8. However, the present invention is not restricted to the present aspect. Each terminal may also be disposed so as to cover only a portion of the main surface of the PTC element. Each terminal may also be arranged so as to overextend slightly from the main surface of the PTC element in any direction.

There are no particular restrictions on the thickness of the first terminal 4 and the second terminal 6 which can be, for example, from 0.05 mm to 3.0 mm, preferably from 0.07 to 0.30 mm, and more preferably from 0.10 to 0.15 mm. The thickness of the first terminal and the second terminal can be the same or different. Also, the thickness of each terminal does not have to be uniform. It can vary.

The length of the first terminal can be, for example, from 10 to 200 mm, preferably from 20 to 140 mm, and more preferably from 30 to 80 mm. Also, the length of the second terminal can be, for example, from 5 to 100 mm, preferably from 7 to 50 mm, and more preferably from 10 to 30 mm.

There are no particular restrictions on the lengths of the first terminal 4 and the second terminal 6. For example, the length of the first terminal can be selected based on the size and type of rechargeable battery using the extracting electrode of the present invention and based on the distance between the PTC element and the rechargeable cell, and the length of the second terminal can be selected based on the size and shape of the other electrical component (such as a board) and based on the distance between the PTC element and the other electrical component.

The materials constituting the first terminal 4 and the second terminal 6 can be the same or different. There are no particular restrictions on the materials constituting the first terminal 4 and the second terminal 6 as long as the materials are conductive. For example, conductive metal materials can be used. Specific examples include nickel, aluminum, stainless steel, iron, copper, tin, titanium, and alloys thereof.

The first terminal 4 and the second terminal 6 may each be formed from one type of metal or from more than one type of metal. For example, the first terminal and the second terminal may have a laminated structure in which layers of two or more types of metal are laminated. The first terminal and the second terminal may also have a clad material or may have a plated surface. All or some of each terminal may have a laminated structure. When laminated terminals are used, it is easier to join the terminals to the PTC element (a PTC element with thin metal electrodes on both main surfaces).

Preferably, the first terminal 4 is made of the same material as the internal electrode or current collector in the rechargeable cell. In one aspect, the material constituting the first terminal 4 is aluminum. When the material constituting the first terminal 4 is aluminum and the material constituting the internal electrode or current collector in the rechargeable cell connected to the first terminal 4 is also aluminum, an electrical connection is easy to establish between the extracting electrode 1 a and the internal electrode or current collector. In another aspect, the material constituting the first terminal 4 is nickel. When the material constituting the first terminal 4 is nickel and the electrode of the present invention is used as a negative electrode, an electrical connection is easy to establish between the electrode and the internal electrode or current collector in a rechargeable cell.

In a preferred aspect, the material constituting the second terminal 6 is the same as the material constituting the connection point of the other electrical component to the rechargeable battery. When the second terminal 6 is made of the same material as the connection point to the other electrical component, an electrical connection is easy to establish between the extracting electrode 1a and the other electrical component.

In another preferred aspect, the second terminal 6 is made of the same material as the other extracting electrode (the negative extracting electrode when the extracting electrode of the present invention is a positive electrode and the positive extracting electrode when the extracting electrode of the present invention is a negative electrode). For example, the second terminal 6 of the extracting electrode 1 a in the present invention is made of nickel when the other extracting electrode is made of nickel.

When the second terminal is made of the same material as the other extracting electrode, it is easy to establish an electrical connection between a positive or negative electrode and another electrical component such as a board. For example, when the other electrical component is a printed circuit board, the surface of the connection side for the extraction electrode (such as a pad) is usually made of one type of metal. When the positive electrode and the negative electrode of the rechargeable cell is made of a different material, at least one of the materials is different from the material at the connection site on the board and a connection has to be established between different metals. Specifically, when the positive electrode is made of aluminum, the negative electrode is made of nickel, and the connection side on the board is made of nickel, the connection between the positive electrode and the board is a connection between different metals. This makes welding more difficult and complicated. When the second terminal and the other extracting electrode are made of the same material, this problem is avoided and a connection can be easily established with the other electrical component.

Because the extracting electrode of the present invention can use a first terminal 4 and a second terminal 6 made of different materials, the first terminal 4 can use a material suitable for a rechargeable battery and the second terminal 6 can use a material suitable for a board.

Thus, the extracting electrode 1 a of the present invention is suitable for use as an extracting electrode for a lithium-ion polymer rechargeable battery, especially a lithium-ion polymer rechargeable battery whose positive internal electrode or current collector is made of aluminum and the negative internal electrode or current collector is made of nickel.

The extracting electrode 1a of the present invention can be used advantageously in a pouch-type rechargeable battery requiring an extracting electrode that can be either a positive electrode or a negative electrode.

Thus, the present invention also provides a rechargeable battery having an extracting electrode of the present invention.

There are no particular restrictions on the rechargeable battery of the present invention. Examples include lithium-ion polymer rechargeable batteries, lithium-ion rechargeable batteries, and alkali rechargeable batteries. However, the rechargeable battery of the present invention is preferably a lithium-ion polymer rechargeable battery.

FIG. 3 shows a lithium-ion polymer rechargeable battery 11 in an aspect of the present invention (referred to below simply as the "rechargeable battery 11") connected electrically to a board 12. The lithium-ion polymer rechargeable battery 11 of the present invention, has a cell 14, an extracting electrode 1a of the present invention serving as the positive electrode, and a negative electrode 16. Usually, a plurality of rechargeable cells are stacked inside a rechargeable battery pack. In the rechargeable battery 11, the first terminal 4 of the extracting electrode 1a is connected electrically to the internal electrode or current collector inside a rechargeable cell 14. The second terminal 6 of the extracting electrode 1a is connected electrically to a board 12 via a welding tab 18 (the wiring on the board has been omitted from the drawing).

In the present aspect of the present invention, the rechargeable battery 11 of the present invention has an extracting electrode 1 a of the present invention serving as a positive extracting electrode. In the lithium-ion polymer rechargeable battery, the main components in the internal electrode and current collector of the rechargeable cell are preferably made of aluminum. In order to make welding of the extracting electrode to the positive current collector easier, the connecting portion of the positive current collector to the extracting electrode is preferably made of aluminum. When the entire extracting electrode is made of aluminum as in the prior art (see, for example, FIG. 4) and the connection site on the other electrical component such as a board is made of a metal other than aluminum, it can be difficult to establish a connection between the different metals. When this problem occurs, as shown in FIG. 4, a complicated welding procedure is required in which, for example, the positive electrode 34 is interposed between nickel tabs 44. However, when an extracting electrode 1a of the present invention is used as the positive extracting electrode, the connecting portion to the internal electrode or current collector in the rechargeable cell (that is, the first terminal) can be made of aluminum, and the connecting portion to the other electrical component (that is, the second terminal) can be made of a more suitable material for establishing a connection with the other electrical component (for example, nickel). In other words, connections can be established more easily with both the rechargeable cell and the other electrical component.

The extracting electrode 1 a of the present invention is preferably disposed so that the PTC element 2 is as close as possible to the cell 14. In other words, the length of the extension from the first terminal 4 of the extracting electrode 1a is preferably nearly the same or slightly greater than the length from the connection between the first terminal and the current collector to the portion of the first terminal exposed from the cell. When the PTC element is closer to the rechargeable cell, heat from the overheating cell can be detected and the element activated more quickly. However, the present invention is not restricted to the present aspect. For example, the PTC element 2 can be positioned close to the board or on top of the board.

Because the extracting electrode in a rechargeable battery of the present invention has a PTC element, the rechargeable battery itself has a protective function against overcurrents and overheating. Because the PTC element is closer to the rechargeable cell, the protective function is better against overheating. Because the second terminal in the extracting electrode can be made of any material, it is easier to establish an electrical connection to other electronic elements.

An electrode of the present invention is manufactured so that the first terminal is connected electrically to one main surface of the PTC element and the second terminal is connected electrically to the other main surface. The method used to connect the first terminal or the second terminal to a main surface of the PTC element can be electrical or mechanical. For example, the terminals and the PTC element can be subjected to thermocompression bonding or can be connected using a connecting material such as a conductive adhesive. In a preferred aspect, a PTC element is used in which a thin metal electrode is provided on both main surfaces of the PTC element, and a layered metal electrode on the PTC element and the first terminal or the second terminal are connected by welding or by using a connecting material such as solder, a conductive adhesive, a conductive paste, or a silver brazing material. The first terminal and the second terminal can be connected to the main surfaces of the PTC element simultaneously or successively.

An electrode of the present invention and a rechargeable battery using this electrode were described above. However, the present invention is not limited to these examples. Many other variations are possible. For example, the electrode of the present invention can be used as an electrode for an electrical device other than a rechargeable battery.

FIG. 5 shows the extracting electrode 1b in the second embodiment of the present invention. In the extracting electrode 1 b, the second terminal 6 extends from the PTC element 2 in a direction forming a right angle to the first terminal 4. The angle formed by the first terminal 4 and the second terminal 6 does not have to be an exact right angle. For example, it can form an angle from 75 to 105°, preferably from 80 to 100°, and more preferably from 85 to 95°. Except for the direction in which the second terminal extends, the electrode 1b has a structure similar to that of the first embodiment described above.

FIG. 3 shows the extracting electrode 1c in the third embodiment of the present invention. In the extracting electrode 1c, the second terminal 6 extends from the PTC element 2 in two directions. The second terminal 6 forms a right angle with the first terminal 4 in both directions. The angle formed by the first terminal 4 and the second terminal 6 in both directions does not have to be an exact right angle. For example, it can form an angle from 75 to 105°, preferably from 80 to 100°, and more preferably from 85 to 95°. Except for the directions in which the second terminal extend, the electrode 1c has a structure similar to that of the first embodiment described above. In the present embodiment, the two extensions of the second terminal can extend in any direction as long as they form a right angle with the first terminal. In the present embodiment, the second terminal extends in opposite directions. However, the present invention is not limited to this embodiment. The extensions can extend in any direction. For example, one extension of the second terminal can extend at a right angle to the first terminal, and the other extension can extend in the opposite direction than the first terminal (forming a 180° angle). In other words, the second terminal can be straight, bent or, in this case, bent at a right angle.

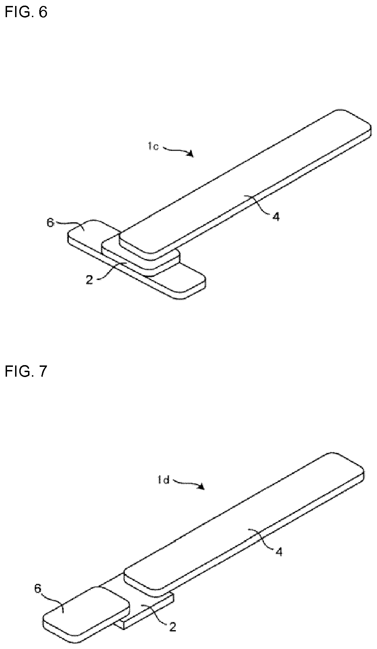

The extracting electrode 1d in a fourth embodiment is shown in FIG. 7. The extracting electrode 1d comprises: a PTC element; a first terminal disposed on a portion of one main surface of the PTC element and extending in one direction; and a second terminal disposed on another portion of the main surface apart from the first terminal and extending in a different direction from the first terminal. In this electrode 1d both the first terminal and the second terminal have the same configuration as the first embodiment described above except that they are both present on the same main surface of the PTC element. The second terminal may be extended in the same manner as the second and third embodiments described above. Note that when the PTC element 2 in the present aspect has layered metal electrodes on the main surface connected to the first and second terminals, the layered metal electrode between the first terminal 4 and the PTC element 2 and the layered metal electrode between the second terminal 6 and the PTC element 2 are separated.

### Industrial Applicability

The extracting electrode of the present invention can be used advantageously as an extracting electrode in various rechargeable batteries.

### Key to the Drawings

1 a, 1 b, 1 c, 1 d: Extracting electrode
2: PTC element
4: First terminal
6: Second terminal
8: Extension of first terminal
10: Extension of second terminal
11: Lithium-ion polymer rechargeable battery
12: Board
14: Cell
16: Negative electrode
18: Welding tab
32: Cell
34: Negative electrode
36: Positive electrode
38: PTC element
40: Board
42: Welding tab
44: Welding tab

## Claims

1. An electrode for an electrical device, the electrode comprising:
a PTC element;
a first terminal disposed on one main surface of the PTC element and extending in one direction; and
a second terminal disposed on the other main surface of the PTC element and
extending in a different direction from the first terminal.

2. An electrode according to claim 1, wherein the second terminal extends in the opposite direction from the first terminal with reference to the PTC element.

3. An electrode according to claim 1, wherein the second terminal extends in a direction substantially at a right angle to the first terminal with reference to the PTC element.

4. An electrode according to claim 1, wherein the second terminal extends in two directions from the PTC element.

5. An electrode according to claim 4, wherein the second terminal extends in two directions from the PTC element, the second terminal extending in each direction substantially at a right angle to the first terminal.

6. An electrode for an electrical device, the electrode comprising:
a PTC element;
a first terminal disposed on a portion of one main surface of the PTC element and
extending in one direction; and
a second terminal disposed on another portion of the main surface apart from the first terminal and extending in a different direction from the first terminal.

7. An electrode according to claim 6, wherein the second terminal extends in the opposite direction from the first terminal with reference to the PTC element.

8. An electrode according to claim 6, wherein the second terminal extends in a direction substantially at a right angle to the first terminal with reference to the PTC element.

9. An electrode according to claim 6, wherein the second terminal extends in two directions from the PTC element.

10. An electrode according to claim 9, wherein the second terminal extends in two directions from the PTC element, the second terminal extending in each direction substantially forming a right angle to the first terminal.

11. An electrode according to any of claims 1 through 10, wherein the electrode is an extracting electrode for a rechargeable battery.

12. An electrode according to any of claims 1 through 11, wherein the electrode has a layered metal electrode positioned between a main surface of the PTC element and the first terminal or the second terminal disposed thereupon.

13. An electrode according to any of claims 1 through 12, wherein the first terminal is formed from aluminum.

14. An electrode according to any of claims 1 through 13, wherein the first terminal is formed from aluminum and the second terminal is formed from nickel.

15. An electrode according to any of claims 1 through 14, wherein the electrode is used as a positive electrode for a rechargeable battery.

16. An electrode according to claim 15, wherein the rechargeable battery is a lithium-ion polymer rechargeable battery.

17. An electrode according to claim 15 or 16, wherein the rechargeable battery is a pouch-type rechargeable battery.

18. A rechargeable battery having an electrode according to any of claims 1 through 17.

19. A rechargeable battery according to claim 18, wherein the rechargeable battery is a lithium-ion polymer rechargeable battery.

20. A rechargeable battery according to claim 18 or 19, wherein an electrode according to any of claims 1 through 17 is used as a positive electrode in the rechargeable battery.

21. A rechargeable battery according to any of claims 18 through 20, wherein the rechargeable battery uses an electrode according to any of claims 1 through 17 having a first terminal formed from aluminum and a second terminal formed from nickel as a positive electrode, and uses another electrode formed from nickel as a negative electrode.

22. A method for manufacturing an electrode according to any of claims 1 through 17 comprising successively or simultaneously connecting a first terminal and a second terminal electrically and mechanically to a main surface of a PTC element.
